# EUROPÄISCHE PATENTSCHRIFT

(11) **EP 0 815 511 B1**
(45) Veröffentlichungstag und Bekanntmachung des Hinweises auf die Patenterteilung: **09.01.2002**
(21) Anmeldenummer: 97906082.9
(22) Anmeldetag: 02.01.1997
(51) Int. Cl.: G06F 11/00

(54) **VERFAHREN UND VORRICHTUNG ZUM ÜBERWACHEN EINER ELEKTRONISCHEN RECHNEREINHEIT**
METHOD AND DEVICE FOR MONITORING AN ELECTRONIC COMPUTING UNIT
PROCEDE ET DISPOSITIF DE CONTROLE D'UN CALCULATEUR ELECTRONIQUE

(30) Priorität: 19.01.1996 DE 19601804
(43) Veröffentlichungstag der Anmeldung: 07.01.1998
(73) Patentinhaber: ROBERT BOSCH GMBH, 70442 Stuttgart (DE)
(72) Erfinder: PIENTKA, Rainer, D-77855 Achern (DE); MEIER, Hans, D-77833 Ottersweier (DE); BLITZKE, Henry, D-77815 Bühl (DE)
(86) Internationale Anmeldenummer: DE9700006
(87) Internationale Veröffentlichungsnummer: WO9726598

(56) Entgegenhaltungen:
- EP-A- 0 338 455
- US-A- 4 586 179
- US-A- 5 412 296

## Beschreibung

### Stand der Technik

Die Erfindung bezieht sich auf ein Verfahren zum Überwachen einer elektrischen Recheneinheit, bei dem nach einer Initialisierung der Recheneinheit bei einem Ausbleiben oder Abfall der Versorgungsspannung von einer Spannungsüberwachungseinrichtung an die Recheneinheit ein Reset-Signal abgegeben und der Betriebszustand der Recheneinheit nach Auftreten des Reset-Signals durch Vergleich eines Inhalts einer flüchtigen Speichereinrichtung mit einem fest vorgegebenen Code überprüft wird und eine Entscheidung bezüglich des weiteren Steuerungsablaufs getroffen wird bzw. eine Vorrichtung zum Überwachen einer elektronischen Recheneinheit, die mindestens eine flüchtige Speichereinrichtung mit einem bei einer Initialisierung eingeschriebenen Code aufweist, mit einer Spannungsüberwachungseinrichtung, mit der beim Ausbleiben oder Abfallen einer von einer Spannungsquelle bereitgestellten Versorgungsspannung unter einen vorgegebenen Spannungspegel ein Reset-Signal für die Recheneinheit erzeugbar ist, mit einer Vergleichereinrichtung, mit der feststellbar ist, ob der in der flüchtigen Speichereinrichtung nach dem Reset-Signal vorhandene Inhalt mit einem dem eingeschriebenen Code entsprechenden vorgegebenen Code übereinstimmt, und mit einer Entscheidungseinrichtung zur Abgabe von Signalen auf der Grundlage des Vergleichsergebnisses.

Ein Verfahren bzw. eine Vorrichtung dieser Art ist in der EP 0 163 670 B1 als bekannt ausgewiesen. Bei diesem bekannten Verfahren bzw. dieser bekannten Vorrichtung wird ein Reset-Signal für eine Recheneinheit ausgelöst, wenn eine Störung der Spannungsversorgung auftritt oder wenn die Recheneinheit keine Signale abgibt. In dem Falle, daß die Recheneinheit keine Signale abgibt, spricht eine externe Überwachungseinrichtung in Form einer sogenannten Watch-Dog-Rücksetzung an, für die mindestens in einem kleinen Teil einer flüchtigen Speichereinrichtung der Recheneinheit ein für die Vorgeschichte der Watch-Dog-Rücksetzung typisches Muster vorliegt, das a-priori bekannt ist. Zum Vergleich wird ein entsprechendes Vergleichsmuster aus einer nichtflüchtigen Speicherrichtung geladen. Entsprechen die in der nichtflüchtigen Speichereinrichtung vorhandenen Werte zumindest teilweise dem vorgegebenen Muster, so wird entschieden, daß das Reset-Signal von der Überwachungseinrichtung kommt; liegt keine Übereinstimmung der Werte der nichtflüchtigen Speichereinrichtung mit dem vorgegebenen Muster vor, so wird davon ausgegangen, daß das Reset-Signal von einer Störung der Spannungsversorgung herrührt. Bei einem Reset-Signal aus der Überwachungseinrichtung wird ein spezifischer Programmablauf in Gang gesetzt, während bei einem durch eine Störung der Spannungsversorgung verursachten Reset-Signal die Recheneinheit neu initialisiert wird. Solche Störungen der Versorungsspannung, die zwar ein Reset-Signal auslösen, jedoch tatsächlich keine Störung in der Recheneinheit verursachen, sind mit dieser bekannten Vorrichtung nicht eindeutig unterscheidbar.

Aus der US-A-4,586,179 ist eine Vorrichtung bekannt, bei der ein Mikroprozessor ein periodisches Signal abgibt, welches von einem Watchdogtimer überwacht wird. Werden seitens des Watchdogtimers Unregelmäßigkeiten festgestellt, wird im Mikroprozessor ein Reset ausgelöst.

Weiterhin ist aus der US-A-4,402,057 bekannt, ein in einem nichtflüchtigen Speicher eines Mikrocomputers hinterlegtes Referenzprüfbitmuster in einem flüchtigen Speichermedium zu speichern. Der Mikrocomputer vergleicht dann die Speicherinhalte des nichtflüchtigen und des flüchtigen Speichers in regelmäßigen Abständen miteinander und löscht im Fehlerfalle den flüchtigen Speicher.

### Vorteile der Erfindung

Der Erfindung liegt die Aufgabe zugrunde, ein Verfahren bzw. eine Vorrichtung der eingangs genannten Art bereitzustellen, mit dem Störungen der Spannungsversorgung, die Fehler in der Recheneinheit verursachten, von solchen Störungen der Spannungsversorgung einfach und zuverlässig unterscheidbar sind, die keine Fehler in der Recheneinheit hervorrufen.

Diese Aufgabe wird mit den in den Patentansprüchen 1 bzw. 5 angegebenen Merkmalen gelöst.

Bei dem Verfahren ist demnach vorgesehen, daß das Reset-Signal stets von der Spannungsüberwachungseinrichtung abgegeben wird, wenn die Versorgungsspannung unter einen Spannungspegel absinkt, oberhalb dessen ein definierter Betrieb der Recheneinheit gewährleistet ist, daß bei jedem Reset-Signal der Inhalt der flüchtigen Speichereinrichtung mit dem vorgegebenen Code verglichen wird und daß mit der Steuerung bei dem beim Auftreten des Reset-Signals vorliegenden Betriebszustand fortgefahren wird, wenn der Inhalt der flüchtigen Speichereinrichtung mit dem Code übereinstimmt, während bei Abweichung des Inhalts der flüchtigen Speichereinrichtung von dem Code eine neue Initialisierung durchgeführt wird, während bei der Vorrichtung vorgesehen ist, daß mit der Entscheidungseinrichtung bei Abweichung des Inhalts der flüchtigen Speichereinrichtung von dem vorgegebenen Code ein erstes Signal abgebbar ist, das eine Reinitialisierung der Recheneinheit auslöst, und daß bei festgestellter Übereinstimmung des Inhalts mit dem vorgegebenen Code ein zweites Signal abgebbar ist, das eine Fortführung des Steuerungsablaufs auf der Grundlage des vor Auftreten des Reset-Signals vorhandenen Betriebszustands bewirkt.

Da das Reset-Signal stets abgegeben wird, wenn die Versorgungsspannung unter einen Spannungspegel absinkt, unterhalb dessen kein definierter Betrieb der Recheneinheit sichergestellt ist, und bei jedem Reset-Signal eine Überprüfung in Gang gesetzt wird, ob der Inhalt des flüchtigen Speichers noch vollständig vorhanden ist, braucht nicht jedesmal eine aufwendige Reinitialisierung der Recheneinheit durchgeführt zu werden. Stimmt nämlich der Inhalt des flüchtigen Speichers noch mit dem eingeschriebenen, vorgegebenen Code überein, so hat der Spannungsabfall mit hoher Sicherheit keine Fehlerzustände in der Recheneinheit hervorgerufen. In diesem Fall wird somit keine Reinitialisierung oder ein weiterer zusätzlicher Programmablauf ausgelöst, sondern es wird mit dem Steuerungsablauf auf der Basis des beim Auftreten des Reset-Signals vorliegenden Betriebszustand fortgefahren. Dadurch ist der Betriebsablauf hinsichtlich Sicherheit und Schnelligkeit der Steuerungsabläufe optimiert. Diese Maßnahmen wirken sich zum Beispiel dann vorteilhaft aus, wenn eine Steuereinrichtung, bei der die Überwachung vorgesehen ist, keine Betriebszustandsanzeige für einen Benutzer besitzt, da dann der Benutzer erst an einer nicht vorhandenen Funktion feststellen könnte, daß das Gerät nicht aktiv ist. Dabei können die erfindungsgemäßen Maßnahmen durch ein in der Recheneinheit vorgesehenes Programm realisiert werden, ohne daß zusätzliche äußere Beschaltungen erforderlich sind.

Eine besonders einfache Ausführung des Verfahrens bzw. der Vorrichtung besteht darin, daß bei einer Recheneinheit, bei der die flüchtige Speichereinrichtung mehrere mit jeweils einer Spannunagsversorgungsleitung versehene Speicherblöcke aufweist, bei der Initialisierung jeweils nur eine von mehreren Zellen jedes Speicherblocks mit einem Element des Codes beschrieben wird, bzw. darin, daß bei einer Recheneinheit, bei der die flüchtige Speichereinrichtung in Blöcke mit jeweils mehreren Speicherzellen aufgeteilt ist und pro Block nur eine Spannungsversorgungsleitung vorgesehen ist, jeweils in nur eine Speicherzelle ein Wert eingeschrieben ist. Das Verfahren ergibt bei einfacher Realisierung dadurch stets eine sichere Überwachung, daß der Code bei jedem Initialisieren aus einer nichtflüchtigen Speichereinrichtung in die flüchtige Speichereinrichtung geschrieben wird.

Eine schaltungstechnisch vorteilhafte Ausbildung der Vorrichtung besteht darin, daß die Spannungsüberwachungseinrichtung als ein Bauelement ausgebildet ist, das auch einen Spannungsregler aufweist.

Vorteilhafte Anwendungen des Verfahrens bzw. der Vorrichtung ergibt der Einsatz bei einer Scheibenwischersteuereinrichtung, da die Recheneinheit selbsttätig auf Störungen optimal reagiert und der Steuerungsablauf ohne Ablenkung des Fahrers weiter abläuft.

Die Erfindung wird nachfolgend anhand eines Ausführungsbeispiels unter Bezugnahme auf die Zeichnungen näher erläutert. Es zeigen:
- Fig. 1: ein Blockschaltbild einer Vorrichtung zum Überwachen einer elektronischen Recheneinheit und
- Fig. 2: die wesentichen Verfahrensschritte bei der Überwachung der elektronischen Recheneinheit.

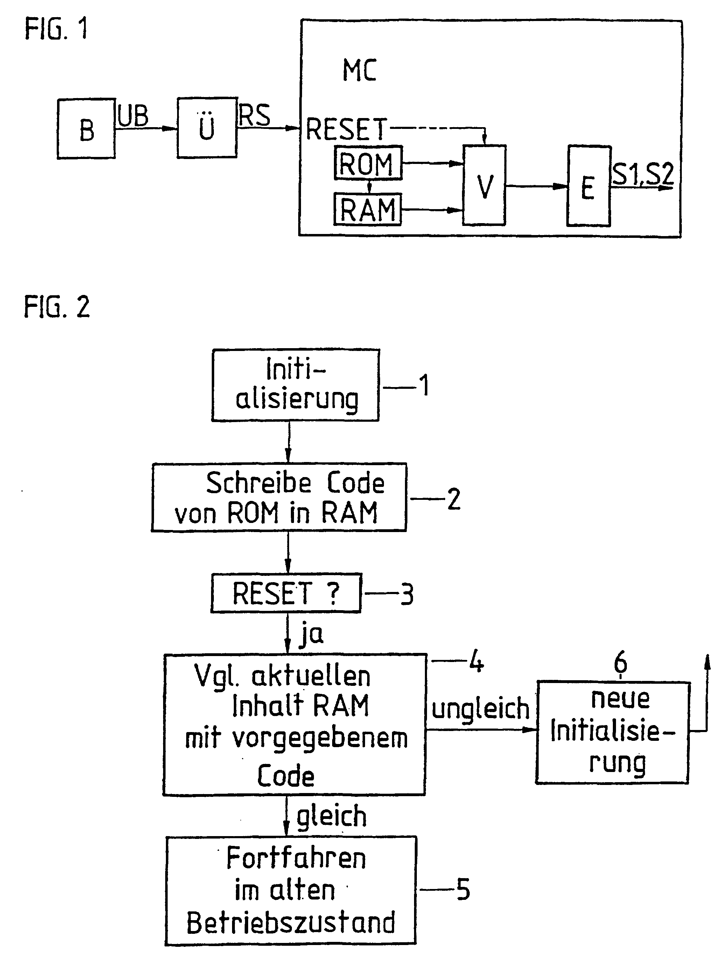

Fig. 1 zeigt eine Vorrichtung zum Überwachen einer elektronischen Recheneinheit, wie sie beispielsweise bei einer Scheibenwischersteuereinrichtung eines Kraftfahrzeugs eingesetzt werden kann. Eine Spannungsquelle in Form einer Batterie B stellt eine Versorgungsspannung UB bereit, die in einer Spannungsüberwachungseinrichtung Ü aufbereitet und den verschiedenen Verbrauchern zur Verfügung gestellt wird, wozu in der Spannungsüberwachungseinrichtung Ü ein Spannungsregler vorgesehen ist. Die Spannungsüberwachungseinrichtung Ü weist außerdem eine Rücksetzeinrichtung auf, die bei einer Aktivierung der Steuereinrichtung ein Einschalt-Reset-Signal (Power-On-Reset) und bei einem kurzzeitigen Abfall der Versorgungsspannung unter einem Pegel, der zu einem undefinierten Zustand führen kann, ein Unterspannungs-Reset-Signal an eine Recheneinheit MC abgibt. Die Recheneinheit MC weist eine nichtflüchtige Speichereinrichtung ROM, eine Vergleichereinrichtung V sowie eine Entscheidungseinrichtung E auf. Die Entscheidungseinrichtung E gibt in Abhängigkeit eines in der Vergleichereinrichtung V erzeugten Vergleichsergebnisses zwischen einem Code der nichtflüchtigen Speichereinrichtung ROM und des Inhalts der flüchtigen Speichereinrichtung RAM ein erstes oder ein zweites Signal S1 bzw. S2 ab, mit denen nach Auftreten eines Reset-Signals der weitere Verfahrensablauf bestimmt wird.

In der Fig. 2 ist der Verfahrensablauf der Überwachung in einem Ablaufdiagramm dargestellt. Bei einer Initialisierung 1 wird veranaißt, daß in einem Schritt 2 der in der nichtflüchtigen Speichereinrichtung ROM vorhandene Code in die flüchtige Speichereinrichtung RAM eingeschrieben wird. Wird in einem Schritt 3 nach einer Initialisierung ein Reset-Signal erfaßt, so wird in der Vergleichereinrichtung V der aktuelle Inhalt des RAM mit dem vorgegebenen Code der nichtflüchtigen Speichereinrichtung ROM verglichen. Ist der Inhalt der flüchtigen Speichereinrichtung RAM gegenüber dem eingeschriebenen, vorgegebenen Code, der dem Code der nichtflüchtigen Speichereinrichtung ROM entspricht, unverändert geblieben, so wird im Steuerungsablauf mit dem beim Auftreten des Reset-Signals vorliegenden Betriebszustand fortgefahren. Ergibt sich eine Abweichung zwischen dem aktuellen Inhalt der flüchtigen Speichereinrichtung RAM von dem vorgegebenen Code, so wird eine neue Initialisierung der Recheneinheit mit Test und Löschen der flüchtigen Speichereinrichtung RAM durchgeführt, so daß der gewünschte Steuerungsablauf wieder definiert vor sich gehen kann.

Der beschriebene Aufbau und Ablauf ist zum Beispiel einfach bei Rechnerfamilien durchzuführen, bei denen die flüchtige Speichereinrichtung RAM in mehrere Blöcke mit zum Beispiel jeweils 16 Bytes aufgeteilt ist und jeder dieser Blöcke über eine Spannungsversorgungszuleitung verfügt, die alle 16 Bytes versorgt. Bei einem Spannungsabfall unter einen Spannungspegel, unterhalb dessen kein definierter Betrieb gewährleistet ist, wird sich beim Auftreten eines Fehlers in der Recheneinheit MC nicht eine einzelne Zelle eines Blocks ändern, sondern immer der ganze Block. Um einen Datenverlust durch Unterspannung oder einen Power-On-Reset zu erkennen und von einer kurzfristigen Unterbrechung der Versorgungsspannung zu unterscheiden, die keinen Fehler hervorruft, genügt es also in jedem Block nur eine Zelle mit einer Konstanten bzw. einem Element des Codes zu beschreiben, die dann nach dem Auftreten eines Reset-Signals verglichen werden können.

Mit den beschriebenen Maßnahmen ist es bei wenig Aufwand möglich, bei Auftreten eines Reset-Signals zuverlässig festzustellen, ob in der Recheneinheit MC ein Fehler aufgetreten ist und mit dem Steuerungsablauf in optimaler Weise fortzufahren ohne unnötige Programmabläufe auszulösen.

## Patentansprüche

1. Verfahren zum Überwachen einer elektrischen Recheneinheit (MC), bei dem nach einer Initialisierung der Recheneinheit (MC) bei einem Ausbleiben oder Abfall der Versorgungsspannung (UB) von einer Spannungsüberwachungseinrichtung (Ü) an die Recheneinheit (MC) ein Reset-Signal (RS) abgegeben und der Betriebszustand der Recheneinheit (MC) nach Auftreten des Reset-Signals (RS) durch Vergleich eines Inhalts einer flüchtigen Speichereinrichtung (RAM) mit einem fest vorgegebenen Code überprüft wird und eine Entscheidung bezüglich des weiteren Steuerungsablaufs getroffen wird,
**dadurch gekennzeichnet,**
**daß** das Reset-Signal (RS) stets von der Spannungsüberwachungseinrichtung (Ü) abgegeben wird, wenn die Versorgungsspannung (UB) unter einen Spannungspegel absinkt, oberhalb dessen ein definierter Betrieb der Recheneinheit (MC) gewährleistet ist, daß bei jedem Reset-Signal (RS) der Inhalt der flüchtigen Speichereinrichtung (RAM) mit dem vorgegebenen Code verglichen wird und daß mit der Steuerung bei dem beim Auftreten des Reset-Signals (RS) vorliegenden Betriebszustand fortgefahren wird, wenn der Inhalt der flüchtigen Speichereinrichtung (RAM) mit dem Code übereinstimmt, während bei Abweichung des Inhalts der flüchtigen Speichereinrichtung (RAM) von dem Code eine neue Initialisierung (1) durchgeführt wird.

2. Verfahren nach Anspruch 1,
**dadurch gekennzeichnet,**
**daß** bei einer Recheneinheit (MC), bei der die flüchtige Speichereinrichtung (RAM) mehrere mit jeweils einer Spannungsversorgungsleitung versehene Speicherblöcke aufweist, bei der Initialisierung (1) jeweils nur eine von mehreren Zellen jedes Speicherblocks mit einem Element des Codes beschrieben wird.

3. Verfahren nach Anspruch 1 oder 2,
**dadurch gekennzeichnet,**
**daß** der Code bei jedem Initialisieren aus einer nichtflüchtigen Speichereinrichtung (ROM) in die flüchtige Speichereinrichtung (RAM) geschrieben wird.

4. Anwendung des Verfahrens nach einem der vorhergehenden Ansprüche bei einer Scheibenwischersteuereinrichtung.

5. Vorrichtung zum Überwachen einer elektronischen Recheneinheit (MC), die mindestens eine flüchtige Speichereinrichtung (RAM) mit einem bei einer Initialisierung (1) eingeschriebenen Code aufweist, mit einer Spannungsüberwachungseinrichtung (Ü), mit der beim Ausbleiben oder Abfallen einer von einer Spannungsquelle bereitgestellten Versorgungsspannung (UB) unter einen vorgegebenen Spannungspegel ein Reset-Signal (RS) für die Recheneinheit (MC) erzeugbar ist, mit einer Vergleichereinrichtung (V), mit der feststellbar ist, ob der in der flüchtigen Speichereinrichtung (RAM) nach dem Reset-Signal (RS) vorgegebenen Code übereinstimmt, und mit einer Entscheidungseinrichtung (E) zur Abgabe von Signalen auf der Grundlage des Vergleichsergebnisses,
**dadurch gekennzeichnet,**
**daß** mit der Entscheidungseinrichtung (E) bei Abweichung des Inhalts der flüchtigen Speichereinrichtung (RAM) von dem vorgegebenen Code ein erstes Signal (S1) abgebbar ist, das eine Reinitialisierung der Recheneinheit (MC) auslöst, und
**daß** bei festgestellter Übereinstimmung des Inhalts mit dem vorgegebenen Code ein zweites Signal (S2) abgebbar ist, das eine Fortführung des Steuerungsablaufs auf der Grundlage des vor Auftreten des Reset-Signals (RS) vorhandenen Betriebszustands bewirkt.

6. Vorrichtung nach Anspruch 5,
**dadurch gekennzeichnet,**
**daß** bei der Recheneinheit (MC), bei der die flüchtige Speichereinrichtung (RAM) in Blöcke mit jeweils mehreren Speicherzellen aufgeteilt ist und pro Block nur eine Spannungsversorgungsleitung vorgesehen ist, jeweils in nur eine Speicherzelle ein Wert eingeschrieben ist.

7. Vorrichtung nach Anspruch 5 oder 6,
**dadurch gekennzeichnet,**
**daß** die Spannungsüberwachungseinrichtung (Ü) als ein Bauelement ausgebildet ist, das auch einen Spannungsregler aufweist.

8. Verwendung der Vorrichtung nach einem der Ansprüche 5 bis 7 bei einer Scheibenwischersteuereinrichtung.

## Claims

1. Method for monitoring an electrical processor (MC), in which, after the processor (MC) has been initialized, a voltage monitoring device (Ü) outputs a reset signal (RS) to the processor (MC) if the supply voltage (UB) is absent or drops, and the operating state of the processor (MC) is checked after occurrence of the reset signal (MR) by comparing a content of a volatile memory device (RAM) with a firmly prescribed code, and a decision is made with regard to the further control procedure,
**characterized**
**in that** the reset signal (RS) is continuously output by the voltage monitoring device (Ü) if the supply voltage (UB) drops below a voltage level above which defined operation of the processor (MC) is ensured,
**in that**, with each reset signal (RS), the content of the volatile memory device (RAM) is compared with the prescribed code, and in that, when control is effected, the operating state prevailing when the reset signal (RS) occurs is continued if the content of the volatile memory device (RAM) matches the code, whereas reinitialization (1) is carried out if the content of the volatile memory device (RAM) differs from the code.

2. Method according to Claim 1,
**characterized**
**in that**, in a processor (MC) in which the volatile memory device (RAM) has a plurality of memory blocks each provided with a voltage supply line, in each case only one of a plurality of cells in each memory block has an element of the code written to it upon initialization (1).

3. Method according to Claim 1 or 2,
**characterized**
**in that** the code is written to the volatile memory device (RAM) from a non-volatile memory device (ROM) upon each initialization.

4. Use of the method according to one of the preceding claims in a windscreen wiper control device.

5. Apparatus for monitoring an electronic processor (MC) which has at least one volatile memory device (RAM) having a code which is written upon initialization (1), having a voltage monitoring device (Ü) which can be used to produce a reset signal (RS) for the processor (MC) when a supply voltage (UB) provided by a voltage source is absent or drops below a prescribed voltage level, having a comparator device (V) which can be used to ascertain whether the code prescribed in the volatile memory device (RAM) after the reset signal (RS) matches, and having a decision device (E) for outputting signals on the basis of the result of the comparison,
**characterized**
**in that** the decision device (E) can be used to output a first signal (S1), which triggers reinitialization of the processor (MC), if the content of the volatile memory device (RAM) differs from the prescribed code, and
**in that**, if a match is established between the content and the prescribed code, a second signal (S2) can be output which continues the control procedure on the basis of the operating state prevailing before the reset signal (RS) occurred.

6. Apparatus according to Claim 5,
**characterized**
**in that**, in the processor (MC), in which the volatile memory device (RAM) is split into blocks having a respective plurality of memory cells, and only one voltage supply line is provided per block, a value is written to only one memory cell in each case.

7. Apparatus according to Claim 5 or 6,
**characterized**
**in that** the voltage monitoring device (Ü) is in the form of a component which also has a voltage regulator.

8. Use of the apparatus according to one of Claims 5 to 7 in a windscreen wiper control device.

## Revendications

1. Procédé pour surveiller un calculateur électrique (MC) selon lequel, après une initialisation du calculateur (MC) en cas de coupure ou de défaillance de la tension d'alimentation (UB), une installation de surveillance de tension (U) fournit un signal de remise à l'état initial (RS) au calculateur (MC) et vérifie l'état de fonctionnement du calculateur (MC) après l'arrivée du signal reset (RS) par comparaison du contenu d'une mémoire vive (RAM) avec un code fixe prédéterminé et prend une décision concernant la suite du déroulement de la commande,
**caractérisé en ce que**
le signal de reset (RS) est toujours fourni par l'installation de surveillance de tension (U) si la tension d'alimentation (UB) descend en dessous d'un niveau de tension, le fonctionnement défini du calculateur (MC) étant assuré au-dessus de ce niveau,
et à chaque signal reset (RS), le contenu de la mémoire vive (RAM) est comparé au code prédéterminé, et
par la commande lors de l'arrivée du signal reset (RS), on poursuit avec l'état de fonctionnement existant si le contenu de la mémoire vive (RAM) correspond au code alors qu'en cas de différence entre le contenu de la mémoire vive (RAM) et le code on exécute une nouvelle initialisation (1).

2. Procédé selon la revendication 1,
**caractérisé en ce que**
pour un calculateur (MC) dont la mémoire vive (RAM) comporte plusieurs blocs de mémoire munis chacun d'une ligne de tension d'alimentation, lors de l'initialisation de chaque fois seulement l'une des différentes cellules de chaque bloc de mémoire, on inscrit avec un élément du code.

3. Procédé selon l'une quelconque des revendications 1 ou 2,
**caractérisé en ce qu'**
à chaque initialisation, le code est inscrit d'une mémoire morte (ROM) dans la mémoire vive (RAM).

4. Application du procédé selon l'une quelconque des revendications précédentes à une installation de commande d'essuie-glace.

5. Dispositif pour surveiller un calculateur électronique (MC) ayant au moins une mémoire vive (RAM) avec un code inscrit lors d'une initialisation (1), une installation de surveillance de tension (U), qui lors de l'absence ou de la coupure d'une tension d'alimentation (UB) fournie par une source de tension, passant en dessous d'un niveau de tension prédéterminé, génère un signal reset (RS) pour le calculateur (MC), un comparateur (V) permettant de déterminer s'il y a correspondance avec le code prédéterminé et la mémoire vive (RAM) après le signal reset (RS), et
une installation de décision (E) pour émettre des signaux fondés sur le résultat de la comparaison,
**caractérisé en ce que**
l'installation de décision (E), en cas de différence entre le contenu de la mémoire vive (RAM) et le code prédéterminé, émet un premier signal (S1) qui déclenche la ré-initialisation du calculateur (MC), et
en cas de concordance constatée entre le contenu et le code prédéterminé il émet un second signal (S2) qui produit la poursuite du déroulement de la commande reposant sur l'état de fonctionnement existant avant que ne soit produit le signal reset (RS).

6. Dispositif selon la revendication 5,
**caractérisé en ce que**
le calculateur (MC) dont la mémoire vive (RAM) est subdivisée en blocs à plusieurs cellules de mémoire et ne comporte qu'une ligne d'alimentation de tension par bloc, une valeur seulement est inscrite dans chaque fois une cellule de mémoire.

7. Dispositif selon l'une quelconque des revendications 5 ou 6,
**caractérisé en ce que**
l'installation de surveillance de tension (U) est réalisée sous la forme d'un composant comportant un régulateur de tension.

8. Application du dispositif selon l'une quelconque des revendications 5 à 7 à une installation de commande d'essuie-glace.
